# FASCICULE DE BREVET EUROPEEN

(11) **EP 3 838 717 B1**
(45) Date de publication et mention de la délivrance du brevet: **16.10.2024**
(21) Numéro de dépôt: 21156202.0
(22) Date de dépôt: 11.11.2016
(51) Int. Cl.: B62D 1/04, B62D 1/06

(54) **VOLANT DE VEHICULE**
LENKRAD FÜR FAHRZEUG
VEHICLE STEERING WHEEL

(30) Priorité: 11.11.2015 FR 1560778
(43) Date de publication de la demande: 23.06.2021
(62) Demande divisionnaire de: 16801162.5
(73) Titulaire: Autoliv Development AB, 447 83 Vårgårda (SE)
(72) Inventeur: BOITTIAUX, Jonathan, 86000 Poitiers (FR); MOINARD, Fabrice, 86170 Vouzailles (FR)
(74) Mandataire: Poindron, Cyrille

(56) Documents cités:
- WO-A1-2014/123222
- DE-A1- 102010 053 354
- US-A1- 2014 224 040

## Description

La présente invention concerne de manière générale un volant de véhicule monté sur un véhicule automobile et qui est équipé de capteurs de présence pour détecter si le conducteur tient le volant ou le lâche, afin d'envoyer par exemple une alarme dans le dernier cas.

Il est connu dans l'art antérieur des volants avec une jante équipée de tels capteurs de présence, tel que celui divulgué par le document US2004267422. En contrepartie, ce système présente notamment l'inconvénient de proposer plusieurs capteurs difficiles à positionner sur le volant et à maintenir en place lors de la fabrication. De plus, en tenant compte du fait que ces capteurs de présence ne doivent pas être visibles, il faut alors les agencer sous la surface externe de la jante, et il faut donc soit les positionner sous une gaine (en cuir par exemple), les noyer ou encore les surmouler avec une matière plastique (telle que du polyuréthane par exemple). En conséquence, cette pluralité de capteurs de présence est un inconvénient pour la fabrication du volant.

Le document US-2014/224040 A1 divulgue un volant d'accord au préambule des revendications indépendantes.

Un but de la présente invention est de répondre aux inconvénients du document de l'art antérieur mentionné ci-dessus et en particulier, tout d'abord, de proposer un volant de véhicule avec plusieurs capteurs de présence, mais dont la fabrication est simplifiée.

Pour cela un premier aspect divulgué concerne un volant de véhicule comprenant :
- une jante,
- une pluralité de capteurs de présence, chacun agencé :
   - pour définir sur la jante une zone de détection parmi une pluralité de zones de détection discrètes, et
   - pour détecter une proximité et/ou un contact entre un membre d'un utilisateur et ladite zone de détection,
- une gaine extérieure recouvrant la pluralité de capteurs de présence, caractérisé en ce que ladite pluralité de capteurs de présence est montée sur un même support,
dans lequel le support avec les capteurs de présence forme une nappe de détection comprenant le support formé par un isolant électrique tel que du polyéthylène supportant sur une première face les capteurs de présence formés par exemple avec un fil en polyamide recouvert avec au moins du nickel, et supportant sur une deuxième face au moins un film ou tissu conducteur électrique de masse, formé par exemple avec un fil en polyamide recouvert avec au moins du nickel, et dans lequel la nappe de détection comprend un film ou tissu conducteur électrique de masse pour une pluralité de capteurs de présence.

Autrement dit, le film ou tissu conducteur électrique de masse est commun, ou partagé pour la pluralité de capteurs de présence.

Les capteurs de présence et/ou le film conducteur de masse se présentent sous forme de feuille ou de film, et peuvent être des matériaux tissés ou non. Cependant, la nappe de détection formée est souple (elle peut s'enrouler autour de la jante et même se déformer pour s'étirer ou se comprimer afin de ne pas être visible une fois qu'elle est recouverte par exemple par du cuir). De plus, le film ou tissu conducteur de masse (autrement appelé blindage ou « guard » ou « shield » en anglais) unique et commun aux capteurs permet de simplifier la construction de la nappe de détection, de limiter le nombre de connexions avec le véhicule et de simplifier l'électronique avec laquelle elle est en liaison. En effet, une seule connexion de masse suffit pour l'ensemble des capteurs de présence. Cela évite une multitude de conducteurs électriques de masse à faire cheminer dans le moyeu, et/ou sous la gaine. De plus l'électronique en liaison avec le conducteur de masse n'a pas besoin d'être multiplexée car le même élément de masse est utilisé pour tous les capteurs. Le volant et l'électronique associée sont donc plus simples.

Avantageusement, le support comprend un seul film ou tissu conducteur électrique de masse.

Avantageusement, la gaine extérieure est cousue avec au moins une couture qui s'étend le long d'au moins une partie de la jante.

Avantageusement, au moins un desdits capteurs de présence est agencé en regard d'au moins une partie de la couture de la gaine extérieure, de sorte à définir une zone de détection qui englobe au moins une partie de ladite au moins une couture et qui s'étend de part et d'autre de ladite au moins une couture, selon une direction transversale à ladite au moins une couture

Le volant selon la mise en oeuvre ci-dessus (avec une gaine extérieure cousue qui recouvre la jante) comprend plusieurs capteurs mais ceux-ci sont solidaires d'un seul et même support, ce qui simplifie la manipulation et le maintien en place lors de la fabrication. De plus, un des capteurs de présence est en regard de la couture de la gaine extérieure qui court le long de la jante.

Une telle couture relie les deux bords longitudinaux de la gaine extérieure, afin de fermer la pièce sur la jante. En effet, avant montage sur le volant, la gaine extérieure est typiquement un morceau de matière de forme généralement rectangulaire. Ce rectangle présente deux bords longitudinaux dont la longueur est sensiblement celle du périmètre intérieur de la jante (puisque la couture est à l'intérieur de la jante, en regard avec le moyeu), et qui sont donc cousus ensembles, bord à bord par exemple. De plus, ce rectangle présente deux bords latéraux dont la longueur est sensiblement celle du périmètre d'une section de la jante dans un plan contenant l'axe d'une colonne de direction. La couture étant situé à l'intérieur de la jante, la gaine extérieure est pré-positionnée sur l'extérieur de la jante et ensuite rabattue vers l'intérieur de sorte que les bords latéraux se fassent face à l'intérieur de la jante.

Pour en revenir au capteur de présence en regard de la couture de la gaine extérieure, celui-ci s'étend donc le long de la couture et également de part et d'autre de cette dernière et permet de détecter une proximité et/ou un contact avec une zone de détection englobant la couture, et allant de part et d'autre de cette couture. En d'autres termes, on peut détecter avec un seul capteur si le conducteur touche le volant sur une portion interne de la jante (une portion en regard du moyeu). Cette mise en oeuvre améliore donc aussi la fabrication en simplifiant l'architecture globale : un seul capteur de présence suffit et permet de détecter une proximité et/ou un contact sur la couture et de part et d'autre de cette dernière (par rapport au sens longitudinal de la couture).

En comparaison avec un volant comprenant un capteur de présence qui entoure la jante, avec une zone de jointure (où les bords du capteur se rejoignent sans se toucher) agencée au niveau de la couture où la détection est impossible en raison de l'espace entre les bords du capteur de présence, l'invention apporte un avantage de détection au niveau de la couture, avec un seul capteur de présence. En d'autres termes, l'invention met à profit l'espace entre deux zones de détection pour positionner la zone de jointure. Cela optimise la couverture de la zone de détection.

Avantageusement, le capteur de présence agencé en regard d'au moins une partie de la couture présente au moins un bord qui se trouve toujours du même côté de la couture. Ce capteur peut par exemple présenter une forme généralement rectangulaire. Un ou deux coté de ce capteur peuvent être sensiblement parallèles à la couture. Cela permet d'optimiser le plan de découpe du capteur et par la même occasion du support de capteur tout en gardant une sensibilité totale au niveau de la couture. La couture étant situé à l'intérieur de la jante, le support de capteur est pré-positionné sur l'intérieur, la face avant ou la face arrière de la jante et ensuite rabattue de sorte que les bords latéraux se fassent face à l'extérieur, à l'avant ou à l'arrière de la jante mais pas à l'intérieure. En d'autres termes, le support de capteur est positionné de manière inversée ou tourné de 90° par rapport à la gaine extérieure puisque celle-ci se ferme à l'intérieur de la jante, au niveau de la couture.

Avantageusement, les capteurs sont de type capacitif.

Avantageusement, ladite au moins une couture ne traverse que la gaine extérieure. Cette mise en oeuvre permet de ne pas affecter le capteur de présence qui est en regard de la couture.

Un autre aspect divulgué concerne un volant de véhicule comprenant :
- une jante,
- une pluralité de capteurs de présence, chacun agencé :
   - pour définir sur la jante une zone de détection parmi une pluralité de zones de détection discrètes, et
   - pour détecter une proximité et/ou un contact entre un membre d'un utilisateur et ladite zone de détection,
- un moyeu, raccordé à la jante par au moins une branche,
- une peau externe en matière plastique, recouvrant au moins la pluralité de capteurs de présence,

caractérisé en ce que ladite pluralité de capteurs de présence est montée sur un même support,
dans lequel le support avec les capteurs de présence forme une nappe de détection comprenant le support formé par un isolant électrique tel que du polyéthylène supportant sur une première face les capteurs de présence formés par exemple avec un fil en polyamide recouvert avec au moins du nickel, et supportant sur une deuxième face au moins un film ou tissu conducteur électrique de masse, formé par exemple avec un fil en polyamide recouvert avec au moins du nickel, et dans lequel la nappe de détection comprend un film ou tissu conducteur électrique de masse pour une pluralité de capteurs de présence.

Autrement dit, le film ou tissu conducteur électrique de masse est commun, ou partagé pour la pluralité de capteurs de présence.

Les capteurs de présence et/ou le film conducteur de masse se présentent sous forme de feuille ou de film, et peuvent être des matériaux tissés ou non. Cependant, la nappe de détection formée est souple (elle peut s'enrouler autour de la jante et même se déformer pour s'étirer ou se comprimer afin être visible une fois qu'elle est recouverte par exemple par du cuir). De plus, le film ou tissu conducteur de masse (autrement appelé blindage ou « guard » ou « shield » en anglais) unique et commun aux capteurs permet de simplifier la construction de la nappe de détection, de limiter le nombre de connexions avec le véhicule et de simplifier l'électronique avec laquelle elle est en liaison. En effet, une seule connexion de masse suffit pour l'ensemble des capteurs de présence. Cela évite une multitude de conducteurs électriques de masse à faire cheminer dans le moyeu, et/ou sous la gaine. De plus l'électronique en liaison avec le conducteur de masse n'a pas besoin d'être multiplexée car le même élément de masse est utilisé pour tous les capteurs. Il n'y a donc qu'un seul élément de masse à alimenter pour tout le dispositif au lien d'un élément de masse par capteur. Le volant et l'électronique associée sont donc plus simples.

Avantageusement, le support comprend un seul film ou tissu conducteur électrique de masse.

Avantageusement, au moins un desdits capteurs de présence est agencé le long d'au moins une partie d'un périmètre intérieur de la jante qui est en regard avec le moyeu, de sorte à définir une zone de détection qui englobe au moins une partie dudit au moins un périmètre intérieur et qui s'étend de part et d'autre dudit au moins un périmètre intérieur, selon une direction transversale dudit au moins un périmètre intérieur

Le volant selon la mise en oeuvre ci-dessus (avec une peau externe lisse et continue, ou sans couture le long de la jante et qui recouvre la jante et surmoulant ou noyant la pluralité de capteurs de présence) comprend plusieurs capteurs mais ceux-ci sont solidaires d'un seul et même support, ce qui simplifie la manipulation et le maintien en place lors de la fabrication. De plus, un des capteurs de présence est agencé au niveau du périmètre intérieur de la jante (la partie en regard du moyeu) et s'étend donc le long d'au moins une partie de ce périmètre intérieur et également de part et d'autre, ce qui permet de détecter une proximité et/ou un contact entre une zone de détection qui englobe le périmètre intérieur, et va de part et d'autre de ce périmètre intérieur. En d'autres termes, on peut détecter avec un seul capteur si le conducteur touche le volant sur une portion interne de la jante (une portion en regard du moyeu). Cette mise en oeuvre améliore donc aussi la fabrication en simplifiant l'architecture globale : un seul capteur de présence suffit et permet de détecter une proximité et/ou un contact sur le périmètre intérieur et de part et d'autre de ce dernier (par rapport au sens longitudinal du périmètre intérieur).

Ainsi, l'invention permet de fournir une détection pour un volant avec gaine cousue ou gaine sans couture dans des zones qui normalement n'ont pas de détection de présence.

Avantageusement, le volant de véhicule comprend :
- un premier capteur de présence agencé pour détecter une proximité et/ou un contact entre un membre d'un utilisateur et une première zone de détection agencée sur une portion intérieure de la jante,
- un deuxième capteur de présence agencé pour détecter une proximité et/ou un contact entre un membre d'un utilisateur et une deuxième zone de détection agencée sur une première moitié d'une portion extérieure de la jante,
- un troisième capteur de présence agencé pour détecter une proximité et/ou un contact entre un membre d'un utilisateur et une troisième zone de détection agencée sur une deuxième moitié d'une portion extérieure de la jante. Le volant selon cette mise en oeuvre permet de différencier la prise en main de l'utilisateur. Si ce dernier touche le volant sur une portion intérieure de la jante, c'est le premier capteur de présence qui le détectera. Si l'utilisateur touche le volant uniquement avec sa main droite sur l'extérieur de la jante, c'est l'un du deuxième ou du troisième capteur de présence qui le détectera. Enfin, si le conducteur touche le volant uniquement avec sa main gauche sur l'extérieur de la jante, c'est l'autre du deuxième ou du troisième capteur de présence qui le détectera. Bien entendu, la détection peut tenir compte de la rotation du volant pour déterminer la gauche de la droite.

Avantageusement, le volant de véhicule comprend au moins une branche pour relier la jante à un moyeu, et le premier capteur de présence contourne ladite au moins une branche et/ou comprend une découpe pour contourner ladite au moins une branche, et recouvre au moins deux portions du périmètre interne séparées par ladite au moins une branche.

Avantageusement, le premier capteur de présence recouvre au moins en partie chacune des portions du périmètre interne séparées par ladite au moins une branche.

Avantageusement, chaque capteur de présence parmi la pluralité de capteurs de présence est agencé pour détecter de manière continue une proximité et/ou un contact entre un membre d'un utilisateur et sa zone de détection respective.

Avantageusement, la nappe de détection et/ou le support avec les capteurs de présence présente une forme allongée et plane avant mise en place autour de la jante, avec deux bords longitudinaux et deux bords latéraux.

Avantageusement, la jante du volant forme sensiblement un tore, obtenu par rotation d'une section de la jante autour d'un cercle de rayon R.

Avantageusement, les bords longitudinaux présentent une longueur qui est sensiblement égale à un périmètre du cercle de rayon R.

Avantageusement, les bords latéraux présentent une longueur qui est sensiblement égale à un périmètre de la section de la jante (dans une section ou coupe par un plan contenant l'axe de rotation du volant, ou du moyeu, ou de la colonne de direction)

Avantageusement, la nappe de détection présente une forme allongée, avec deux bords longitudinaux reliant chacun dans le sens de la longueur deux extrémités, et dans lequel la pluralité de capteurs de présence et ledit au moins un film ou tissu conducteur électrique de masse présentent chacun une portion de connexion, et dans lequel les portions de connexion sont toutes agencées sur un même bord longitudinal. Cette mise en oeuvre permet de simplifier la connexion électrique de la nappe de détection, avec toutes les portions de connexion du même côté de la nappe de détection. De plus, comme il n'y a qu'un seul film ou tissu de masse commun à tous les capteurs, sa connexion est aisée à former sur un bord longitudinal, puisque la surface du film ou tissu de masse commun est forcément tangente ou commune avec ce bord longitudinal. Il est donc plus aisé de réaliser les connexions de la nappe du volant selon l'invention avec le réseau de bord du véhicule. Une portion de connexion est une portion de capteur, c'est-à-dire formé de la même matière que celui-ci capteur, cela permet de ne pas engendrer de surépaisseur de la nappe de détection par l'utilisation d'un autre élément.

Avantageusement, les portions de connexion sont positionnées dans une zone de raccordement entre la jante et au moins une branche. Préférentiellement la zone de raccordement se situe dans la partie basse du volant autrement nommée zone à six heures. Cela permet d'optimiser le positionnement des zones de connexion par rapport aux zones de détection.

Avantageusement, la portion de connexion du deuxième capteur et la portion de connexion du troisième capteur sont agencées de part et d'autre du premier capteur.

Avantageusement, la portion de connexion du premier capteur est agencée entre le deuxième capteur et le troisième capteur.

Avantageusement, le volant de véhicule comprend au moins une branche reliant la jante à un moyeu, avec un premier bord latéral de ladite au moins une branche reliant la jante avec un premier rayon de courbure et un deuxième bord latéral de ladite au moins une branche reliant la jante avec un deuxième rayon de courbure supérieur au premier rayon de courbure, le support et au moins l'un des capteurs de présence recouvre une portion de ladite au moins une branche,
et le support et ledit au moins un des capteurs présentent une découpe décalée vers le premier bord latéral, par rapport à une largeur de ladite au moins une branche. Cette mise en oeuvre facilite la découpe du patron ou de la forme à plat de la nappe de détection, en rapprochant la découpe du bord latéral qui a le plus petit rayon de courbure. Cela facilite aussi le gainage du patron sur le volant et limite de risque de formation de plis.

L'invention concerne un volant de véhicule comprenant :
- une jante,
- une pluralité de capteurs de présence, chacun agencé :
   - pour définir sur la jante une zone de détection parmi une pluralité de zones de détection discrètes, et
   - pour détecter une proximité et/ou un contact entre un membre d'un utilisateur et ladite zone de détection,
- une gaine extérieure recouvrant la pluralité de capteurs de présence et cousue avec au moins une couture qui s'étend le long d'au moins une partie de la jante,
caractérisé en ce que ladite pluralité de capteurs de présence est montée sur un même support, et en ce qu'au moins un desdits capteurs de présence est agencé en regard d'au moins une partie de la couture de la gaine extérieure, de sorte à définir une zone de détection qui englobe au moins une partie de ladite au moins une couture et qui s'étend de part et d'autre de ladite au moins une couture, selon une direction transversale à ladite au moins une couture, dans lequel le capteur de présence agencé en regard d'au moins une partie de la couture présente au moins un bord qui se trouve toujours du même côté de la couture.

Le volant selon la mise en oeuvre ci-dessus (avec une gaine extérieure cousue qui recouvre la jante) comprend plusieurs capteurs mais ceux-ci sont solidaires d'un seul et même support, ce qui simplifie la manipulation et le maintien en place lors de la fabrication. De plus, un des capteurs de présence est en regard de la couture de la gaine extérieure qui court le long de la jante.

Une telle couture relie les deux bords longitudinaux de la gaine extérieure, afin de fermer la pièce sur la jante. En effet, avant montage sur le volant, la gaine extérieure est typiquement un morceau de matière de forme généralement rectangulaire. Ce rectangle présente deux bords longitudinaux dont la longueur est sensiblement celle du périmètre intérieur de la jante (puisque la couture est à l'intérieur de la jante, en regard avec le moyeu), et qui sont donc cousus ensembles, bord à bord par exemple. De plus, ce rectangle présente deux bords latéraux dont la longueur est sensiblement celle du périmètre d'une section de la jante dans un plan contenant l'axe d'une colonne de direction.

Pour en revenir au capteur de présence en regard de la couture de la gaine extérieure, celui-ci s'étend donc le long de la couture et également de part et d'autre de cette dernière et permet de détecter une proximité et/ou un contact avec une zone de détection englobant la couture, et allant de part et d'autre de cette couture. En d'autres termes, on peut détecter avec un seul capteur si le conducteur touche le volant sur une portion interne de la jante (une portion en regard du moyeu). Cette mise en oeuvre améliore donc aussi la fabrication en simplifiant l'architecture globale : un seul capteur de présence suffit et permet de détecter une proximité et/ou un contact sur la couture et de part et d'autre de cette dernière (par rapport au sens longitudinal de la couture).

En comparaison avec un volant comprenant un capteur de présence qui entoure la jante, avec une zone de jointure (où les bords du capteur se rejoignent sans se toucher) agencée au niveau de la couture où la détection est impossible en raison de l'espace entre les bords du capteur de présence, l'invention apporte un avantage de détection au niveau de la couture, avec un seul capteur de présence. En d'autres termes, l'invention met à profit l'espace entre deux zones de détection pour positionner la zone de jointure. Cela optimise la couverture de la zone de détection.

Avantageusement, les capteurs sont de type capacitif.

Avantageusement, ladite au moins une couture ne traverse que la gaine extérieure. Cette mise en oeuvre permet de ne pas affecter le capteur de présence qui est en regard de la couture.

L'invention concerne aussi un volant de véhicule comprenant :
- une jante,
- une pluralité de capteurs de présence, chacun agencé :
   - pour définir sur la jante une zone de détection parmi une pluralité de zones de détection discrètes, et
   - pour détecter une proximité et/ou un contact entre un membre d'un utilisateur et ladite zone de détection,
- un moyeu, raccordé à la jante par au moins une branche,
- une peau externe en matière plastique, recouvrant au moins la pluralité de capteurs de présence,

caractérisé en ce que ladite pluralité de capteurs de présence est montée sur un même support,
et en ce qu'au moins un desdits capteurs de présence est agencé le long d'au moins une partie d'un périmètre intérieur de la jante qui est en regard avec le moyeu, de sorte à définir une zone de détection qui englobe au moins une partie dudit au moins un périmètre intérieur et qui s'étend de part et d'autre dudit au moins un périmètre intérieur, selon une direction transversale dudit au moins un périmètre intérieur, dans lequel le capteur de présence agencé le long d'au moins une partie du périmètre intérieur de la jante présente au moins un bord qui se trouve toujours du même côté du périmètre intérieur de la jante.

Le volant selon la mise en oeuvre ci-dessus (avec une peau externe lisse et continue, ou sans couture le long de la jante et qui recouvre la jante et surmoulant ou noyant la pluralité de capteurs de présence) comprend plusieurs capteurs mais ceux-ci sont solidaires d'un seul et même support, ce qui simplifie la manipulation et le maintien en place lors de la fabrication. De plus, un des capteurs de présence est agencé au niveau du périmètre intérieur de la jante (la partie en regard du moyeu) et s'étend donc le long d'au moins une partie de ce périmètre intérieur et également de part et d'autre, ce qui permet de détecter une proximité et/ou un contact entre une zone de détection qui englobe le périmètre intérieur, et va de part et d'autre de ce périmètre intérieur. En d'autres termes, on peut détecter avec un seul capteur si le conducteur touche le volant sur une portion interne de la jante (une portion en regard du moyeu). Cette mise en oeuvre améliore donc aussi la fabrication en simplifiant l'architecture globale : un seul capteur de présence suffit et permet de détecter une proximité et/ou un contact sur le périmètre intérieur et de part et d'autre de ce dernier (par rapport au sens longitudinal du périmètre intérieur).

Ainsi, l'invention permet de fournir une détection pour un volant avec gaine cousue ou gaine sans couture dans des zones qui normalement n'ont pas de détection de présence.

Bien entendu tous les aspects indépendants ci-dessus peuvent être combinés entre eux pour obtenir une forme d'exécution particulière de l'invention.

Un autre aspect de l'invention concerne un véhicule automobile comprenant un volant selon les aspects précédents.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de face d'un volant de véhicule selon la présente invention, avec trois zones de détection de proximité et/ou de contact entre un membre d'un utilisateur et la jante ;
- la figure 2 représente une coupe du volant de véhicule de la figure 1 selon l'axe II-II
- la figure 3 représente un détail de la coupe représentée figure 2
- la figure 4 représente une première mise en oeuvre d'une nappe de détection définissant les trois zones de détection de la figure 1 ;
- la figure 5 représente une alternative de la nappe de détection de la figure 4.

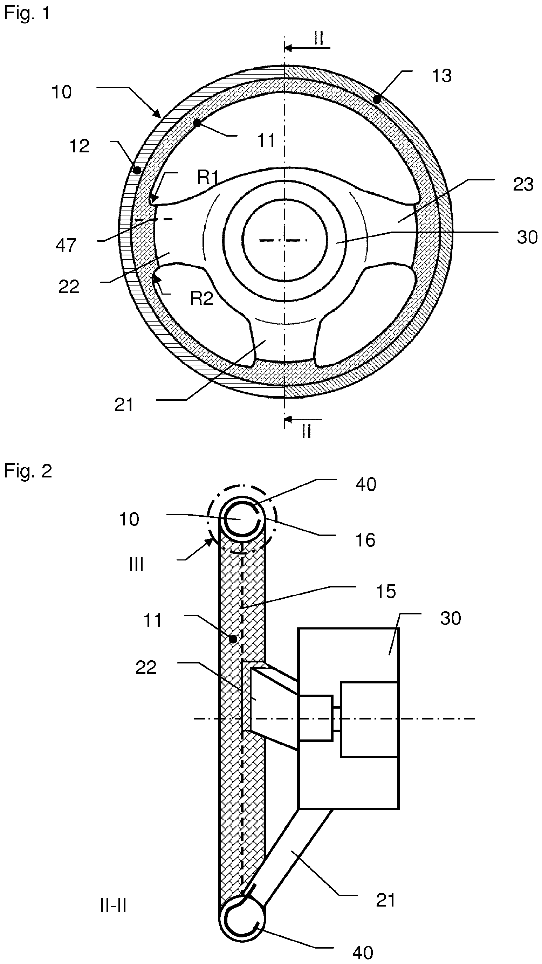

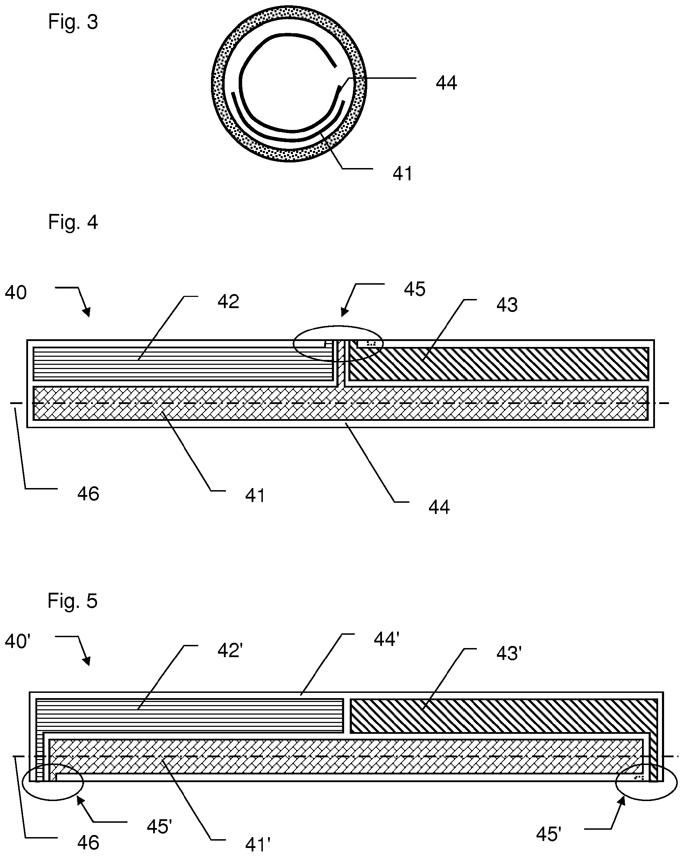

La figure 1 représente un volant de véhicule comprenant une jante 10, un moyeu 30, relié à la jante 10 par trois branches 21, 22, 23. Conformément à l'invention, le volant comprend une pluralité de capteurs de présence 41, 42, 43 (visibles figure 3) agencée sous une gaine extérieure 16 (visible figure 2, et en cuir par exemple).

Au cours de la fabrication, la gaine extérieure 16 est posée sur le volant et en particulier sur la jante 10, puis cousue sur elle-même avec au moins une couture 15 qui s'étend le long de la jante 10 et visible figure 2.

Chaque capteur de présence de la pluralité de capteurs de présence 41, 42, 43 définit une zone de détection 11, 12 et 13 de proximité et/ou de contact entre un membre d'un utilisateur et la jante 10. Comme on le voit sur la figure 1, la zone de détection 11 est située sur la portion interne de la jante 10, c'est-à-dire sur sa portion en regard avec le moyeu 30. C'est-à-dire que la zone de détection 11 englobe la couture 15 de la gaine extérieure 16, et s'étend même de part et d'autre de la couture 15 pour couvrir toute la portion intérieure de la jante 10 en regard avec le moyeu 30, comme on peut le voir figure 2.

La figure 2 est une coupe selon l'axe II-II représenté figure 1, où l'on voit une nappe de détection 40 qui est sous la gaine extérieure 16. Cette nappe de détection 40 comprend un support sur lequel sont montés les capteurs de présence 41, 42, et 43, comme on le voit sur la figure 3 pour le capteur de présence 41.

Au niveau de la figure 2, on peut voir sur la section supérieure de la jante 10 que la nappe de détection 40 est enroulée autour de la jante 10, avec un jointement qui est situé à 15 heures environ, c'est-à-dire à l'opposé du conducteur. Cette section, entourée par la zone III est d'ailleurs détaillée figure 3. Pour une fermeture à 15 heures environ, la nappe 40 est pré-positionnée lors de son assemblage à 21 heures environ (c'est-à-dire sur la face avant du volant) puis les bords latéraux sont rabattus vers l'arrière du volant, à 15 heures. Le positionnement initial de la nappe 40 pouvant varier tant que le jointoiement reste compris entre 21 heures et 15 heures, c'est-à-dire dans la partie supérieure de la figure 3 et ne soit donc pas situé dans la zone intérieure de la jante.

En d'autre termes, la zone de jointement où les bords longitudinaux de la nappe de détection sont en regard l'un de l'autre n'est pas sous la couture 15 comme cela se fait généralement lorsque des éléments sont gainés sur la jante d'un volant. Cette zone de jointement est décalée angulairement, ce qui permet de n'avoir qu'un seul capteur de présence 41 pour définir une seule zone de détection 11, qui est continue. La mise en oeuvre des connaissances générales, avec une zone de jointoiement sous la couture, engendrerait nécessairement, sous la couture, une zone sans détection. Il est à noter que les bords de la nappe de détection 40 ne se touchent pas, ou qu'il n'y a pas de contact électrique entre ces bords.

Enfin, au niveau de la figure 2, on voit au niveau de la jonction de la branche 21 avec la jante 10, que la nappe de détection 40 recouvre une partie de la branche 21. En raison des rayons de raccordement entre les branches 21, 22, 23, on peut prévoir des découpes dans la nappe de détection 40 pour recouvrir à partir d'un même patron ces portions de branche. Si comme pour la branche 22, il y a deux rayons de raccordement R1 et R2 différents, alors il est avantageux de prévoir la découpe du côté du plus petit rayon, pour limiter les plis de la nappe de détection 40 lors de la fabrication. Par exemple, la découpe pourra avoir lieu au niveau de la ligne 47 représentée figure 1, qui est plus proche du rayon R1 que du rayon R2, dans le sens de la largeur de la branche 22. Préférentiellement, la découpe est faite sur une partie de la nappe de détection 40 qui est à l'arrière du volant, sur la face opposée au conducteur.

La figure 4 représente une première mise en oeuvre d'une nappe de détection 40. Celle-ci comprend donc tous les capteurs de présence 41, 42, 43, un film ou tissus de masse 44, et le support (non visible) agencé entre les capteurs de présence 41, 42, 43, et le film ou tissus de masse 44. Typiquement, les capteurs de présence 41, 42, 43, et le film ou tissus de masse 44 sont des feuilles ou film ou tissus comprenant au moins un fil de polyamide recouvert au moins partiellement de nickel. En d'autres termes, les capteurs de présence 41, 42, 43 sont des capteurs capacitifs, avec la nappe de détection 40 formant un sandwich ou composite à cet effet. Le support est donc un isolant électrique, et peut être réalisé en polyéthylène moussé par exemple. Sur cette figure et la figure 5, la future position de la couture 15 est représentée par le trait mixte 46. Telle que représenté, le capteur 41 présente une forme généralement rectangulaire dont les longs cotés sont sensiblement parallèles à la couture 15. Ainsi les long cotés sont toujours du même côté de la couture 15. Le plan de découpe de capteur 41 est dont optimisé puisque qu'il n'y a pas de perte lors de la découpe de de celui-ci. La couture étant situé à l'intérieur de la jante, le support de capteur est pré-positionné sur l'intérieur de la jante et ensuite rabattue vers l'extérieur de sorte que les bords latéraux se fassent face à l'extérieur de la jante. En d'autres termes, le support de capteur est positionné de manière inversée par rapport à la gaine extérieure puisqu'elle se ferme à l'intérieur de la jante alors que le support de capteur se ferme à l'extérieur de la jante.

Les capteurs de présence 41, 42, 43, et le film ou tissus de masse 44 ont donc besoin d'être raccordés électriquement, et il est prévu dans la zone 45 des portions de connexion vers un réseau de bord du véhicule. Pour simplifier le montage toutes les portions de connexion sont agencées sur un même bord de la nappe de détection 40, un des bords longitudinaux, si elle présente une forme rectangulaire comme ici. Il est à noter que la forme présentée ici est un schéma, et il faut garder à l'esprit que la nappe de détection 40 selon l'invention peut comprendre des évidements pour contourner les branches 21, 22, 23 du volant.

Dans le cas présent, la portion de connexion du capteur de présence 41 est agencée entre les deux autres capteurs de présence 42 et 43. Si on envisage une connexion avec le réseau de bord au niveau de la branche 21 inférieure (située à 6 heures), permettant d'utiliser les capteurs de présence 42 et 43 pour détecter un présence à l'extérieur gauche ou droit du volant, alors les deux extrémités de la nappe de détection 40 seront agencées à 12 heures sur le volant. Le positionnement de la zone de connexion 45 sur le côté longitudinal opposée au trait mixte 46 entraine un positionnement de cette zone de connexion sur le volant, une fois la nappe de détection gainée sur le volant, au-dessus de la branche 21. Cela est simplifie le raccordement ultérieur au réseau du véhicule car la branche 21 n'a pas à être traversée par un faisceau électrique pour raccorder la nappe de détection au moyeu. Egalement, toutes les connexions se font donc au niveau d'une seule et même branche, ce qui procure un faisceau électrique simple.

En alternative, comme représenté sur la figure 5, on peut prévoir les portions de connexion aux extrémités d'une nappe de connexion 40', où le capteur de présence 41' est agencé entre une portion de connexion du capteur de présence 42' et une portion de connexion du capteur de présence 43'. Il y a aussi bien entendu une portion de connexion du capteur de présence 41' et une portion de connexion du film ou tissus de masse 44', également aux extrémités, et toujours sur le même côté longitudinal de la nappe de connexion 40'. Le positionnement de la zone de connexion 45' sur le côté longitudinal le plus proche du trait mixte 46 entraine un positionnement de cette zone de connexion sur le volant, une fois la nappe de détection gainée sur le volant, au-dessous de la branche 21. Cela nécessite de faire traverser ou contourner la branche 21 par un faisceau électrique pour raccorder la nappe de détection au moyeu. Ici encore toutes les connexions se font donc au niveau d'une seule et même branche, ce qui procure un faisceau électrique simple.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Volant de véhicule comprenant :
- une jante (10),
- une pluralité de capteurs de présence (41, 42, 43), chacun agencé :
- pour définir sur la jante (10) une zone de détection parmi une pluralité de zones de détection (11, 12, 13) discrètes, et
- pour détecter une proximité et/ou un contact entre un membre d'un utilisateur et ladite zone de détection,
- une gaine extérieure (16) recouvrant la pluralité de capteurs de présence (41, 42, 43) et cousue avec au moins une couture (15) qui s'étend le long d'au moins une partie de la jante (10),
**caractérisé en ce que** ladite pluralité de capteurs de présence (41, 42, 43) est montée sur un même support, et **en ce qu'**au moins un desdits capteurs de présence (41, 42, 43) est agencé en regard d'au moins une partie de la couture (15) de la gaine extérieure (16), de sorte à définir une zone de détection qui englobe au moins une partie de ladite au moins une couture (15) et qui s'étend de part et d'autre de ladite au moins une couture (15), selon une direction transversale à ladite au moins une couture (15), dans lequel le capteur de présence agencé en regard d'au moins une partie de la couture présente au moins un bord qui se trouve toujours du même côté de la couture.

2. Volant de véhicule selon la revendication précédente, dans lequel ladite au moins une couture (15) ne traverse que la gaine extérieure (16).

3. Volant de véhicule comprenant :
- une jante (10),
- une pluralité de capteurs de présence (41, 42, 43), chacun agencé :
- pour définir sur la jante (10) une zone de détection parmi une pluralité de zones de détection (11, 12, 13) discrètes, et
- pour détecter une proximité et/ou un contact entre un membre d'un utilisateur et ladite zone de détection,
- un moyeu, raccordé à la jante (10) par au moins une branche (21, 22, 23),
- une peau externe en matière plastique, recouvrant au moins la pluralité de capteurs de présence (41, 42, 43),
**caractérisé en ce que** ladite pluralité de capteurs de présence (41, 42, 43) est montée sur un même support,
et **en ce qu'**au moins un desdits capteurs de présence (41, 42, 43) est agencé le long d'au moins une partie d'un périmètre intérieur de la jante (10) qui est en regard avec le moyeu, de sorte à définir une zone de détection qui englobe au moins une partie dudit au moins un périmètre intérieur et qui s'étend de part et d'autre dudit au moins un périmètre intérieur, selon une direction transversale dudit au moins un périmètre intérieur, dans lequel le capteur de présence agencé le long d'au moins une partie d'un périmètre intérieur de la jante (10) présente au moins un bord qui se trouve toujours du même côté du périmètre intérieur de la jante (10).

4. Volant de véhicule selon l'une des revendications précédentes, comprenant :
- un premier capteur de présence (41) agencé pour détecter une proximité et/ou un contact entre un membre d'un utilisateur et une première zone de détection (11) agencée sur une portion intérieure de la jante (10),
- un deuxième capteur de présence (42) agencé pour détecter une proximité et/ou un contact entre un membre d'un utilisateur et une deuxième zone de détection (12) agencée sur une première moitié d'une portion extérieure de la jante (10),
- un troisième capteur de présence (43) agencé pour détecter une proximité et/ou un contact entre un membre d'un utilisateur et une troisième zone de détection (13) agencée sur une deuxième moitié d'une portion extérieure de la jante (10).

5. Volant de véhicule selon l'une des revendications précédentes, dans lequel le support avec les capteurs de présence (41, 42, 43) forme une nappe de détection (40) comprenant le support formé par un isolant électrique tel que du polyéthylène supportant sur une première face les capteurs de présence (41, 42, 43) formés par exemple avec un fil en polyamide recouvert avec au moins du nickel, et supportant sur une deuxième face au moins un film ou tissu conducteur électrique de masse, formé par exemple avec un fil en polyamide recouvert avec au moins du nickel.

6. Volant de véhicule selon la revendication précédente, dans lequel la nappe de détection (40) comprend un seul un film ou tissu conducteur électrique de masse

7. Volant de véhicule selon l'une des revendications 5 ou 6, dans lequel la nappe de détection (40) présente une forme allongée, avec deux bords longitudinaux reliant chacun dans le sens de la longueur deux extrémités, et dans lequel la pluralité de capteurs de présence (41, 42, 43) et ledit au moins un film ou tissu conducteur électrique de masse présentent chacun une portion de connexion, et dans lequel les portions de connexion sont toutes agencées sur un même bord latéral.

8. Volant de véhicule selon la revendication précédente, dans sa dépendance à la revendication 4, dans lequel la portion de connexion du deuxième capteur (42) et la portion de connexion du troisième capteur (43) sont agencées de part et d'autre du premier capteur (41).

9. Volant de véhicule selon la revendication 7, dans sa dépendance à la revendication 4, dans lequel la portion de connexion du premier capteur (41) est agencée entre le deuxième capteur (42) et le troisième capteur (43).

10. Volant de véhicule selon l'une des revendications précédentes, comprenant au moins une branche (21, 22, 23) reliant la jante (10) à un moyeu, avec un premier bord latéral de ladite au moins une branche (21, 22, 23) reliant la jante (10) avec un premier rayon de courbure et un deuxième bord latéral de ladite au moins une branche (21, 22, 23) reliant la jante (10) avec un deuxième rayon de courbure supérieur au premier rayon de courbure, dans lequel le support et au moins l'un des capteurs de présence (41, 42, 43) recouvre une portion de ladite au moins une branche (21, 22, 23), et dans lequel le support et ledit au moins un des capteurs présentent une découpe décalée vers le premier bord latéral, par rapport à une largeur de ladite au moins une branche (21, 22, 23).

11. Véhicule automobile comprenant un volant selon l'une des revendications précédentes.

## Patentansprüche

1. Fahrzeuglenkrad, umfassend:
- einen Kranz (10),
- eine Vielzahl von Anwesenheitssensoren (41, 42, 43), die jeweils angeordnet sind:
- um an dem Kranz (10) eine Erfassungszone unter einer Vielzahl von diskreten Erfassungszonen (11, 12, 13) zu definieren, und
- um eine Nähe und/oder einen Kontakt zwischen einer Gliedmaße eines Benutzers und der Erfassungszone zu erfassen,
- eine Außenhülle (16), die die Vielzahl von Anwesenheitssensoren (41, 42, 43) abdeckt und mit mindestens einer Naht (15) vernäht ist, die sich entlang mindestens eines Teils des Kranzes (10) erstreckt,
**dadurch gekennzeichnet, dass** die Vielzahl von Anwesenheitssensoren (41, 42, 43) auf einem gleichen Träger montiert sind und dass mindestens einer der Anwesenheitssensoren (41, 42, 43) mindestens gegenüber einem Teil der Naht (15) der Außenhülle (16) angeordnet ist, um eine Erfassungszone zu definieren, die mindestens einen Teil der mindestens einen Naht (15) enthält und die sich auf beiden Seiten der mindestens einen Naht (15) erstreckt, gemäß einer Richtung quer zu der mindestens einen Naht (15), wobei der Anwesenheitssensor, der mindestens gegenüber einem Teil der Naht angeordnet ist, mindestens eine Kante aufweist, die sich immer auf der gleichen Seite der Naht befindet.

2. Fahrzeuglenkrad nach dem vorstehenden Anspruch, wobei die mindestens eine Naht (15) nur durch die Außenhülle (16) verläuft.

3. Fahrzeuglenkrad, umfassend:
- einen Kranz (10),
- eine Vielzahl von Anwesenheitssensoren (41, 42, 43), die jeweils angeordnet sind:
- um an dem Kranz (10) eine Erfassungszone unter einer Vielzahl von diskreten Erfassungszonen (11, 12, 13) zu definieren, und
- um eine Nähe und/oder einen Kontakt zwischen einer Gliedmaße eines Benutzers und der Erfassungszone zu erfassen,
- eine Nabe, die durch mindestens eine Speiche (21, 22, 23) mit dem Kranz (10) verbunden ist,
- eine Außenhaut aus Kunststoff, die mindestens die Vielzahl von Anwesenheitssensoren (41, 42, 43) bedeckt,
**dadurch gekennzeichnet, dass** die Vielzahl von Anwesenheitssensoren (41, 42, 43) auf einem gleichen Träger montiert sind,
und dass mindestens einer der Anwesenheitssensoren (41, 42, 43) entlang mindestens eines Teils eines Innenumfangs des Kranzes (10) angeordnet ist, der sich gegenüber der Nabe befindet, um so eine Erfassungszone zu definieren, die mindestens einen Teil des mindestens einen Innenumfangs enthält und der sich auf beiden Seiten des mindestens einen Innenumfangs gemäß einer Querrichtung des mindestens einen Innenumfangs erstreckt, wobei der Anwesenheitssensor, der entlang mindestens eines Teils eines Innenumfangs des Kranzes (10) angeordnet ist, mindestens eine Kante aufweist, die immer auf der gleichen Seite des Innenumfangs des Kranzes (10) liegt.

4. Fahrzeuglenkrad nach einem der vorstehenden Ansprüche, umfassend:
- einen ersten Anwesenheitssensor (41), der angeordnet ist, um eine Nähe und/oder einen Kontakt zwischen einer Gliedmaße eines Benutzers und einer ersten Erfassungszone (11) zu erfassen, die an einem inneren Abschnitt des Kranzes (10) angeordnet ist,
- einen zweiten Anwesenheitssensor (42), der angeordnet ist, um eine Nähe und/oder einen Kontakt zwischen einer Gliedmaße eines Benutzers und einer zweiten Erfassungszone (12) zu erfassen, die an einer ersten Hälfte eines äußeren Abschnitts des Kranzes (10) angeordnet ist,
- einen dritten Anwesenheitssensor (43), der angeordnet ist, um eine Nähe und/oder einen Kontakt zwischen einer Gliedmaße eines Benutzers und einer dritten Erfassungszone (13) zu erfassen, die an einer zweiten Hälfte eines äußeren Abschnitts des Kranzes (10) angeordnet ist.

5. Fahrzeuglenkrad nach einem der vorstehenden Ansprüche, wobei der Träger mit den Anwesenheitssensoren (41, 42, 43) eine Erfassungsfolie (40) bildet, die den Träger umfasst, der durch einen elektrischen Isolator wie Polyethylen gebildet ist, der auf einer ersten Seite die Anwesenheitssensoren (41, 42, 43) trägt, die beispielsweise mit einem mit mindestens Nickel überzogenen Polyamiddraht gebildet sind, und auf einer zweiten Seite mindestens einen elektrisch leitenden Erdungsfilm oder ein elektrisch leitendes Erdungsgewebe trägt, der/das beispielsweise mit einem mit mindestens Nickel überzogenen Polyamiddraht gebildet ist.

6. Fahrzeuglenkrad nach dem vorstehenden Anspruch, wobei die Erfassungsfolie (40) einzig einen elektrisch leitenden Erdungsfilm oder ein elektrisch leitendes Erdungsgewebe umfasst.

7. Fahrzeuglenkrad nach einem der Ansprüche 5 oder 6, wobei die Erfassungsfolie (40) eine längliche Form aufweist, wobei zwei Längskanten jeweils in Richtung der Länge zwei Enden verbinden, und wobei die Vielzahl von Anwesenheitssensoren (41, 42, 43) und der mindestens eine elektrisch leitende Erdungsfilm oder das elektrisch leitende Erdungsgewebe jeweils einen Verbindungsabschnitt aufweisen und wobei die Verbindungsabschnitte alle an einer gleichen Seitenkante angeordnet sind.

8. Fahrzeuglenkrad nach dem vorstehenden Anspruch in seiner Abhängigkeit von Anspruch 4, wobei der Verbindungsabschnitt des zweiten Sensors (42) und der Verbindungsabschnitt des dritten Sensors (43) auf beiden Seiten des ersten Sensors (41) angeordnet sind.

9. Fahrzeuglenkrad nach Anspruch 7 in seiner Abhängigkeit von Anspruch 4, wobei der Verbindungsabschnitt des ersten Sensors (41) zwischen dem zweiten Sensor (42) und dem dritten Sensor (43) angeordnet ist.

10. Fahrzeuglenkrad nach einem der vorstehenden Ansprüche, umfassend mindestens eine Speiche (21, 22, 23), die den Kranz (10) mit einer Nabe verbindet, wobei eine erste Seitenkante der mindestens einen Speiche (21, 22, 23) den Kranz (10) mit einem ersten Krümmungsradius verbindet und eine zweite Seitenkante der mindestens einen Speiche (21, 22, 23) den Kranz (10) mit einem zweiten Krümmungsradius, der größer als der erste Krümmungsradius ist, verbindet, wobei der Träger und mindestens einer der Anwesenheitssensoren (41, 42, 43) einen Abschnitt der mindestens einen Speiche (21, 22, 23) abdecken und wobei der Träger und der mindestens eine der Sensoren einen Ausschnitt aufweisen, der zu der ersten Seitenkante hin relativ zu einer Breite der mindestens einen Speiche (21, 22, 23) versetzt ist.

11. Kraftfahrzeug, umfassend ein Lenkrad nach einem der vorstehenden Ansprüche.

## Claims

1. Vehicle steering wheel comprising:
- a rim (10),
- a plurality of presence sensors (41, 42, 43), each arranged:
- so as to define on the rim (10) one detection zone among a plurality of discrete detection zones (11, 12, 13), and
- so as to detect proximity and/or contact between a user's limb and said detection zone,
- an outer sheath (16) covering the plurality of presence sensors (41, 42, 43) and sewn with at least one seam (15) which extends along at least one portion of the rim (10),
**characterized in that** said plurality of presence sensors (41, 42, 43) is mounted on a single support, and **in that** at least one of said presence sensors (41, 42, 43) is arranged opposite at least one portion of the seam (15) of the outer sheath (16), so as to define a detection zone which encompasses at least one portion of said at least one seam (15) and which extends on either side of said at least one seam (15), in a transverse direction relative to said at least one seam (15), wherein the presence sensor which is arranged opposite at least one portion of the seam has at least one edge which is always on the same side of the seam.

2. Vehicle steering wheel according to the preceding claim, wherein said at least one seam (15) only passes through the outer sheath (16).

3. Vehicle steering wheel comprising:
- a rim (10),
- a plurality of presence sensors (41, 42, 43), each arranged:
- so as to define on the rim (10) one detection zone among a plurality of discrete detection zones (11, 12, 13), and
- so as to detect proximity and/or contact between a user's limb and said detection zone,
- a hub which is connected to the rim (10) by at least one spoke (21, 22, 23),
- an outer skin made of plastics material which covers at least the plurality of presence sensors (41, 42, 43),
**characterized in that** said plurality of presence sensors (41, 42, 43) is mounted on a single support,
and **in that** at least one of said presence sensors (41, 42, 43) is arranged along at least one portion of an inner perimeter of the rim (10) that faces the hub, so as to define a detection zone which encompasses at least one portion of said at least one inner perimeter and which extends on either side of said at least one inner perimeter, in a transverse direction relative to said at least one inner perimeter, wherein the presence sensor which is arranged along at least one portion of an inner perimeter of the rim (10) has at least one edge which is always on the same side of the inner perimeter of the rim (10).

4. Vehicle steering wheel according to one of the preceding claims, comprising:
- a first presence sensor (41) arranged so as to detect proximity and/or contact between a user's limb and a first detection zone (11) arranged on an inner portion of the rim (10),
- a second presence sensor (42) arranged so as to detect proximity and/or contact between a user's limb and a second detection zone (12) arranged on a first half of an outer portion of the rim (10),
- a third presence sensor (43) arranged so as to detect proximity and/or contact between a user's limb and a third detection zone (13) arranged on a second half of an outer portion of the rim (10).

5. Vehicle steering wheel according to one of the preceding claims, wherein the support which comprises the presence sensors (41, 42, 43) forms a detection layer (40) which comprises the support formed by an electrical insulator such as polyethylene which carries, on a first face, the presence sensors (41, 42, 43) which are formed, for example, so as to comprise a polyamide yarn covered with at least nickel, and which carries, on a second face, at least one electrically conductive ground film or fabric which is formed, for example, so as to comprise a polyamide yarn covered with at least nickel.

6. Vehicle steering wheel according to the preceding claim, wherein the detection layer (40) comprises a single electrically conductive ground film or fabric.

7. Vehicle steering wheel according to one of claims 5 or 6, wherein the detection layer (40) is elongate, having two longitudinal edges each connecting two ends lengthwise, and wherein the plurality of presence sensors (41, 42, 43) and said at least one electrically conductive ground film or fabric each have a connecting portion, and wherein the connecting portions are all arranged on a single lateral edge.

8. Vehicle steering wheel according to the preceding claim, in its dependency on claim 4, wherein the connecting portion of the second sensor (42) and the connecting portion of the third sensor (43) are arranged on either side of the first sensor (41).

9. Vehicle steering wheel according to claim 7, in its dependency on claim 4, wherein the connecting portion of the first sensor (41) is arranged between the second sensor (42) and the third sensor (43).

10. Vehicle steering wheel according to one of the preceding claims, comprising at least one spoke (21, 22, 23) which connects the rim (10) to a hub, a first lateral edge of said at least one spoke (21, 22, 23) connecting the rim (10) to a first radius of curvature and a second lateral edge of said at least one spoke (21, 22, 23) connecting the rim (10) to a second radius of curvature greater than the first radius of curvature, wherein the support and at least one of the presence sensors (41, 42, 43) covers a portion of said at least one spoke (21, 22, 23), and wherein the support and said at least one of the sensors have a cutout which is offset toward the first lateral edge, relative to a width of said at least one spoke (21, 22, 23).

11. Motor vehicle comprising a steering wheel according to one of the preceding claims.
